# EUROPEAN PATENT APPLICATION

(11) **EP 4 317 247 A1**
(43) Date of publication of application: **07.02.2024**
(21) Application number: 22856087.6
(22) Date of filing: 02.08.2022
(51) Int. Cl.: C08G 63/78, C08G 63/02

(54) **POLYMERIZATION REACTION DEVICE FOR HIGH VISCOSITY RESINS**

(30) Priority: 12.08.2021 KR 20210106873; 28.07.2022 KR 20220093906
(71) Applicant: LG Chem, Ltd., Seoul 07336 (KR)
(72) Inventor: KIM, Junsoo, Daejeon 34122 (KR); SONG, Youngsoo, Daejeon 34122 (KR); IM, Ye Hoon, Daejeon 34122 (KR); CHOE, Dongcheol, Daejeon 34122 (KR); CHOI, Jong Young, Daejeon 34122 (KR)
(74) Representative: Goddar, Heinz J.
(86) International application number: PCT/KR2022/011357
(87) International publication number: WO 2023/018088

(57) **Abstract**

Disclosed is a polymerization reaction device for a high viscosity resin such as a biodegradable resin. The polymerization reaction device of a high viscosity resin includes a cylindrical reactor having an inlet formed at an upper part and a discharge port formed at a lower part; and an impeller rotatably arranged inside the reactor and configured to mix materials in the reactor. The materials in the reactor are mixed by the impeller and polymerized into the high viscosity resin, and the polymerized high viscosity resin is discharged to an outside of the reactor through the discharge port by applying an inert gas. A ratio of a diameter of the discharge port to a diameter of the reactor may be set such that 80% or more of the high viscosity resin is discharged from the reactor from a time point when the applying of the inert gas starts to a time point when the inert gas reaches the discharge port.

## Description

### [Technical Field]

### CROSS-REFERENCE TO RELATED APPLICATION

This application claims priority to and the benefit of Korean Patent Application No. 10-2021-0106873 filed in the Korean Intellectual Property Office on August 12, 2021, and Korean Patent Application No. 10-2022-0093906 filed in the Korean Intellectual Property Office on July 28, 2022, the entire contents of which are incorporated herein by reference.

The present invention relates to a polymerization reaction device for a high viscosity resin, and more particularly, to a polymerization reaction device for a high viscosity resin capable of increasing a discharge rate of the high viscosity resin such as a biodegradable resin and reducing an undischarged amount of the resin.

### [Background Art]

Biodegradable resins such as PLA, PLH and PBAT are produced by introducing and polymerizing a monomer and an initiator into a polymerization reaction device. Since such biodegradable resins are high viscosity resins having a viscosity of several tens to several millions cP, it is necessary to design an impeller and a polymerization reaction device suitable for the high viscosity resins.

In addition, the polymerized resin is discharged through a lower part of the polymerization reaction device by applying nitrogen for pressurization to an upper portion thereof. In this case, a discharge rate of the resin varies depending on a shape and a size of a discharge part at the lower part of the polymerization reaction device. When the discharge rate of the resin is too high, a time required for the nitrogen for pressurization to reach the discharge part at the lower part of the polymerization reaction device is too short, and resultantly, an undischarged amount of the resin may increase. In other words, before the nitrogen for pressurization reaches the discharge part at the lower part of the polymerization reaction device, the resin is pushed and discharged with sufficient pressing force, but after the nitrogen for pressurization reaches the discharge part at the lower part of the polymerization reaction device, the nitrogen for pressurization itself escapes to the outside of the polymerization reaction device through the discharge part, and therefore, efficiency of discharging the resin is lowered. Accordingly, the undischarged amount of the resin may increase.

The matters described in the background art section are prepared to enhance understanding of the background of the invention, and may include matters that have not been known to one skilled in the art to which the present technology belongs.

### [Disclosure]

### [Technical Problem]

An exemplary embodiment of the present invention is to provide a polymerization reaction device for a high viscosity resin capable of increasing a discharge rate of the high viscosity resin such as a biodegradable resin while reducing an undischarged amount of the high viscosity resin.

### [Technical Solution]

A polymerization reaction device of a high viscosity resin according to an exemplary embodiment of the present invention includes a cylindrical reactor having an inlet formed at an upper part and a discharge port formed at a lower part; and an impeller rotatably arranged inside the reactor and configured to mix materials in the reactor.

The materials in the reactor are mixed by the impeller and polymerized into the high viscosity resin, and the polymerized high viscosity resin is discharged to an outside of the reactor through the discharge port by applying an inert gas.

A ratio of a diameter of the discharge port to a diameter of the reactor may be set such that 80% or more of the high viscosity resin is discharged from the reactor from a time point when the applying of the inert gas starts to a time point when the inert gas reaches the discharge port.

In some examples, the ratio of the diameter of the discharge port to the diameter of the reactor may be 1/15 or less.

The lower part of the reactor may be formed as a conical part whose diameter decreases downward toward the discharge port. An angle between a side surface of the conical part and a horizontal plane may be set to correspond to an angle between a surface of the high viscosity resin remaining in the reactor and the horizontal plane at the time point when the inert gas reaches the discharge port.

In some examples, the angle between the side surface of the conical part and the horizontal plane may be 40°to 50°.

The impeller may include a vertical frame installed in a vertical direction inside the reactor and configured to rotate by receiving rotational power; at least one horizontal frame mounted to the vertical frame and extending in a radial direction; at least one blade mounted to the at least one horizontal frame and formed in a spiral shape to surround the vertical frame; and an anchor mounted to the lowermost horizontal frame among the at least one horizontal frame and protruding downward to a position corresponding to the conical part.

The anchor may include a first portion installed at a radially outer end portion of the lowermost horizontal frame and extending obliquely downward to correspond to the side surface of the conical part; and a second portion installed on the lowermost horizontal frame on a radially inner side of the first portion, extending downward and connected to the first portion.

The second portion may be spaced apart from an outer circumferential surface of the discharge port by a set distance in a radially outward direction.

The inert gas may be nitrogen.

The high viscosity resin may be a biodegradable resin.

### [Advantageous Effects]

According to an exemplary embodiment of the present invention, a discharge amount of the high viscosity resin in a first phase can be increased by appropriately setting the ratio of the diameter of the discharge port to the diameter of the reactor. Accordingly, the discharge rate of the high viscosity resin may be increased while an undischarged amount of the high viscosity resin may be reduced.

In addition, by forming the lower part of the reactor as a conical part, the high viscosity resin is more influenced by gravity during discharging.

Furthermore, the discharge amount of the high viscosity resin in the first phase can be further increased by appropriately setting the angle between the side surface of the conical part and the horizontal plane.

In addition, the effects that can be obtained or expected by the exemplary embodiments of the present invention will be directly or implicitly disclosed in the detailed description of the exemplary embodiments of the present invention. That is, various effects that may be expected by the exemplary embodiments of the present invention will be disclosed in the detailed description described below.

### [Description of the Drawings]

The exemplary embodiments in the present specification may be better understood by referring to the following description in conjunction with the accompanying drawings in which like reference numbers indicate the same or functionally similar elements.
FIG. 1 is a schematic diagram of a polymerization reaction device for a high viscosity resin according to an exemplary embodiment of the present invention.
FIG. 2 is another schematic diagram of the polymerization reaction device for a high viscosity resin according to the exemplary embodiment of the present invention.
FIG. 3 is a schematic diagram showing a flow of a high viscosity resin in a reactor over time when nitrogen for pressurization is applied.
FIG. 4 is a graph showing a discharge amount of a high viscosity resin and a remaining amount of the high viscosity resin in a reactor over time when nitrogen for pressurization is applied.
FIG. 5 is a schematic diagram showing a flow of the high viscosity resin in the reactor over time when a ratio of a diameter of a discharge port to a diameter of the reactor is 4/30.
FIG. 6 is a schematic diagram showing a flow of the high viscosity resin in the reactor over time when the ratio of the diameter of the discharge port to the diameter of the reactor is 2/30.
FIG. 7 is a schematic diagram showing a flow of the high viscosity resin during mixing of the high viscosity resin when an angle between a side surface of a conical part and a horizontal plane is 30°.
FIG. 8 is a schematic diagram showing a flow of the high viscosity resin during mixing of the high viscosity resin when the angle between the side surface of the conical part and the horizontal plane is 45°.

It should be understood that the above-referenced drawings are not necessarily drawn to scale, and present rather simplified representations of various preferred features illustrating the basic principles of the present invention. The specific design features of the present invention, including, for example, specific dimensions, orientations, locations, and shapes, will be determined in part by the specific intended application and use environment.

### [Mode for Invention]

The terminology used herein is for the purpose of describing specific exemplary embodiments only and is not intended to be limiting the present invention. As used herein, the singular forms are intended to include the plural forms as well, unless the context clearly indicates otherwise. It will be further understood that the terms "comprises" and/or "comprising", when used in the present specification, specify the presence of stated features, integers, steps, operations, constitutional elements, and/or components, but do not preclude the presence or addition of one or more other features, integers, steps, operations, constitutional elements, components, and/or groups thereof. As used herein, the term "and/or" includes any one or all combinations of the associated listed items.

In a polymerization reaction device for a high viscosity resin according to exemplary embodiments of the present invention, a discharge amount of a high viscosity resin in a first phase can be increased by appropriately setting a ratio of a diameter of a discharge port to a diameter of a reactor and an angle between a side surface of a conical part and a horizontal plane. Accordingly, an undischarged amount of the high viscosity resin remaining in the reactor without being discharged from the reactor can be reduced.

Hereinafter, exemplary embodiments of the present invention will be described in detail with reference to the accompanying drawings.

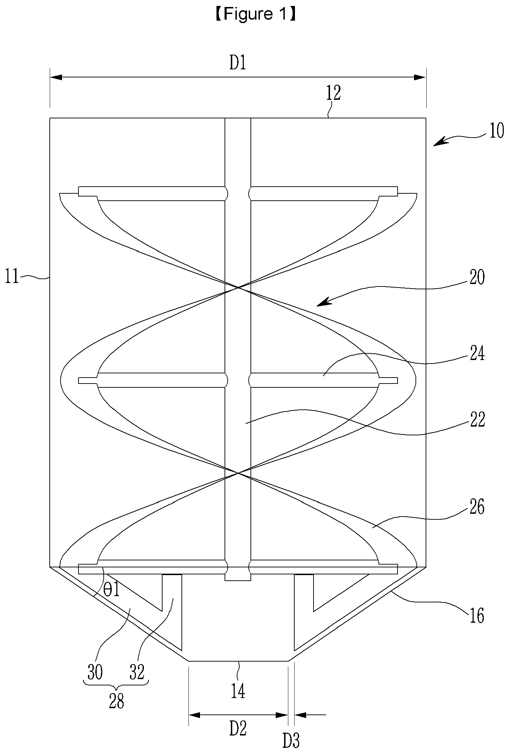

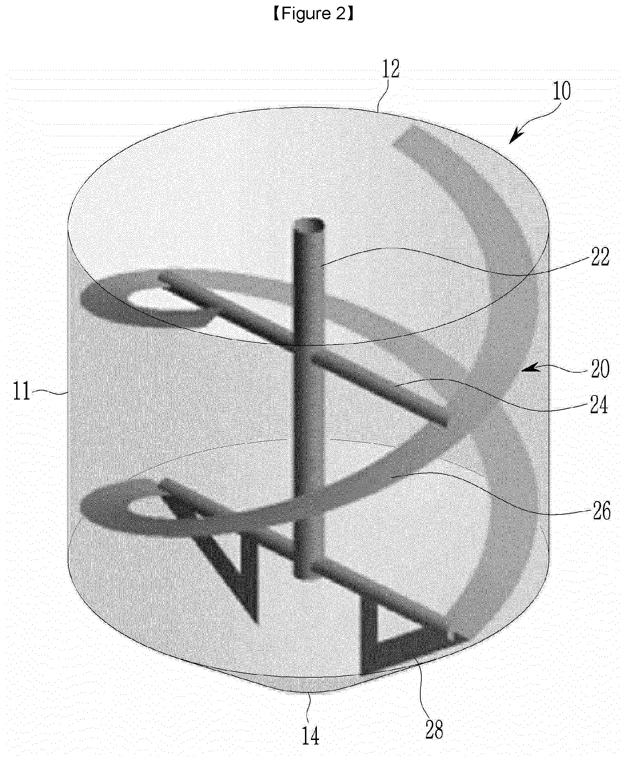

FIG. 1 is a schematic diagram of a polymerization reaction device for a high viscosity resin according to an exemplary embodiment of the present invention, and FIG. 2 is another schematic diagram of the polymerization reaction device for a high viscosity resin according to the exemplary embodiment of the present invention.

As shown in FIGS. 1 and 2, a polymerization reaction device 10 for a high viscosity resin according to an exemplary embodiment of the present invention includes a reactor 11 and an impeller 20 inside the reactor 11.

The reactor 11 has a substantially cylindrical shape, and includes an inlet 12 formed at an upper part and a discharge port 14 formed at a lower part. A monomer and an initiator used for a polymerization reaction are introduced into the reactor 11 through the inlet 12, and the polymerized high viscosity resin is discharged to an outside of the reactor 11 through the discharge port 14 by an inert gas for pressurization (e.g., nitrogen or the like) and gravity.

The reactor 11 includes the upper part, a middle part, and the lower part sequentially from top to bottom. The reactor 11 has a substantially constant diameter D1 from the upper part (e.g., the inlet 12) to the middle part where the impeller 20 is located, and is formed of a conical part 16 whose diameter gradually decreases from the middle part to the lower part (e.g., the discharge port 14). That is, the discharge port 14 has the smallest diameter in the reactor 11, and the diameter of the reactor 11 is referred to as D2. In addition, a ratio at which the diameter of the reactor 11 decreases, for example, an angle between a side surface of the conical part 16 and a horizontal plane is referred to as θ1. Usually, the reactor 11 is formed in an elliptical shape, but in the exemplary embodiment of the present invention, the lower part of the reactor 11 is formed of the conical part 16 having an optimized θ1 so that the high viscosity resin is more influenced by gravity during discharging.

In an exemplary embodiment of the present invention, a ratio of the diameter D2 of the discharge port 14 to the diameter D1 of the reactor 11 is set to 1/15 or less in order to increase a discharge rate of the high viscosity resin while reducing an undischarged amount thereof. In addition, in order to increase the discharge rate of the high viscosity resin and to further reduce the undischarged amount, the angle θ1 between the side surface of the conical part 16 and the horizontal plane is set within a range of 40° to 50°. This will be described below in more detail.

The impeller 20 is rotatably arranged inside the reactor 11 and mixes the monomer and initiator introduced into the reactor 11 through the inlet 12 to facilitate the polymerization reaction. In one example, the impeller 20 may be a double spiral ribbon type impeller 20, but a type of the impeller 20 is not limited thereto.

In this example, the impeller 20 includes a rod-shaped vertical frame 22, at least one rod-shaped horizontal frame 24, and at least one blade 26.

The vertical frame 22 is installed in a vertical direction (i.e., up-down direction) at a center inside the reactor 11, and an upper end thereof is connected to a power source (not shown) to receive rotational power.

At least one horizontal frame 24 is mounted at and radially extends from a set position of the vertical frame 22. When two or more horizontal frames 24 are installed on the vertical frame 22, the two or more horizontal frames 24 may be installed on the vertical frame 22 while being spaced apart from each other. Both ends of the horizontal frame 24 may extend to a vicinity of an outer circumferential surface of the reactor 11.

At least one blade 26 may be installed in a spiral shape to surround the vertical frame 22 at an end portion of at least one horizontal frame 24. By extending the horizontal frame 24 to the vicinity of the outer circumferential surface of the reactor 11 and installing the blade 26 in the spiral shape at the end portion of the horizontal frame 24, a mixing efficiency of the high viscosity resin by the impeller 20 can be improved.

The impeller 20 further includes at least one anchor 28. The anchor 28 is arranged at a position corresponding to the conical part 16 of the reactor 11. That is, the anchor 28 protrudes downward from the lowermost horizontal frame 24 among the at least one horizontal frame 24 and is formed to correspond to a shape and a position of the conical part 16. The anchor 28 is provided for smooth mixing of the high viscosity resin in the lower part of the reactor 11, particularly in the conical part 16.

The anchor 28 may include first and second portions 30 and 32 integrally formed with each other. The first portion 30 of the anchor 28 is installed at a radially outer end portion of the lowermost horizontal frame 24 and extends obliquely downward. The first portion 30 of the anchor 28 extends obliquely downward to correspond to the side surface of the conical part 16. That is, an angle between the first portion 30 and the horizontal plane is θ1 or close to θ1. The second portion 32 of the anchor 28 is installed on the lowermost horizontal frame 24 at a radially inner side of the first portion 30, extends downward vertically or substantially vertically and is connected to the first portion 30. The second portion 32 is spaced apart from an outer circumferential surface of the discharge port 14 by a set distance D3 in a radially outward direction so as not to interfere with the discharge of the resin through the discharge port 14.

Hereinafter, operations of the polymerization reaction device for a high viscosity resin according to the exemplary embodiment of the present invention will be described in brief.

When the monomer and the initiator are introduced into the reactor 11 through the inlet 12, the impeller 20 receives rotational power from the power source and rotates. In this case, the at least one horizontal frame 24 mounted to the vertical frame 22, the at least one blade 26 and the anchor 28 rotate together with the vertical frame 22 to mix the monomer and initiator inside the reactor 11, so that the polymerization reaction is started.

When the polymerization reaction is completed and the rotation of the impeller 20 is stopped, the inert gas (e.g., nitrogen) for pressurization is applied into the reactor 11 through the inlet 12 to start discharging the high viscosity resin.

Hereinafter, a flow of the high viscosity resin in the reactor 11 when nitrogen for pressurization is applied will be described.

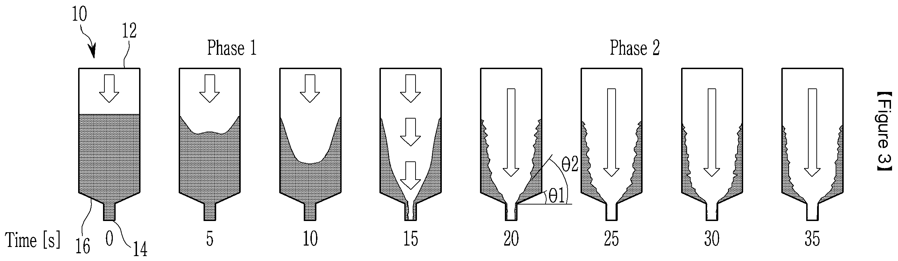

FIG. 3 is a schematic diagram showing a flow of a high viscosity resin in a reactor over time when nitrogen for pressurization is applied.

As shown in FIG. 3, when the polymerization reaction of the high viscosity resin such as the biodegradable resin is completed, the nitrogen for pressurization starts to be applied to the high viscosity resin (see 0 sec.). Accordingly, the high viscosity resin starts to be discharged from the reactor 11 through the discharge port 14. In this case, due to the high viscosity, the high viscosity resin near the central axis of the reactor 11 moves downward more quickly than the high viscosity resin near the outer circumferential surface of the reactor 11, and accordingly, the surface of the high viscosity resin is formed concave downward in the radial direction at the central portion (see 5 sec.). A depth of the concave surface of the high viscosity resin becomes greater over time (see 10 sec.).

When more time elapses, the nitrogen for pressurization reaches the discharge port 16 of the reactor 11, and thus a first phase (Phase 1) ends (see 15 sec.). Here, the first phase refers to a period from a time point when the nitrogen for pressurization is applied to a time point when the nitrogen for pressurization reaches the discharge port 16. In the first phase, the high viscosity resin can be discharged in a controlled manner by the nitrogen for pressurization.

The high viscosity resin remaining inside the reactor 11 without being discharged in the first phase is located near a wall of the reactor 11, and an angle θ2 is formed between a surface of the remaining high viscosity resin and the horizontal plane. Since the angle θ2 between the surface of the remaining high viscosity resin and the horizontal plane is formed as the nitrogen for pressurization forcibly discharges the high viscosity resin through the discharge port 16, when the angle θ1 between the side surface of the conical part 16 and the horizontal plane is set to correspond to the angle θ2 between the surface of the remaining high viscosity resin and the horizontal plane, the discharge amount of the high viscosity resin in the first phase can be increased, and accordingly, the amount of the remaining high viscosity resin (i.e., the undischarged amount) can be reduced.

Thereafter, a second phase (Phase 2) begins (refer to 15 sec. to 35 sec.). In the second phase, since the high viscosity resin flows down the wall of the reactor 11 and the conical part 16 by gravity rather than the nitrogen for pressurization, it may be difficult to discharge the high viscosity resin in a controlled manner as in the first phase. In addition, since the nitrogen for pressurization does not greatly affect the discharging of the high viscosity resin, the angle θ2 between the surface of the remaining high viscosity resin and the horizontal plane does not change significantly.

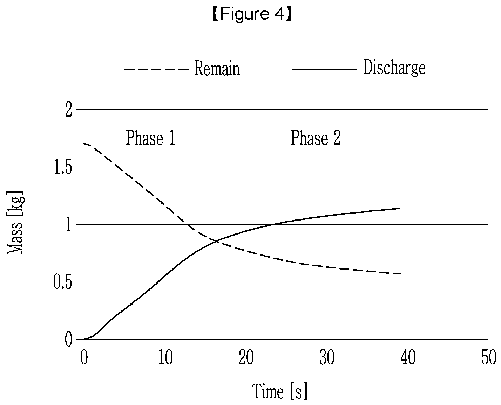

FIG. 4 is a graph showing a discharge amount of the high viscosity resin and a remaining amount of the high viscosity resin in the reactor over time when the nitrogen for pressurization is applied. In FIG. 4, a solid line represents the discharge amount of the high viscosity resin discharged from the reactor 11, and a dotted line represents the amount of the high viscosity resin remaining in the reactor 11 without being discharged.

As shown in FIG. 4, when the nitrogen for pressurization is applied, the discharge amount of the high viscosity resin is constantly increased in the first phase. An increasing rate (corresponding to a discharge rate) of the discharge amount of the high viscosity resin in the first phase is usually related to a pressure of the nitrogen (e.g., 3 bar to 7 bar). However, when the discharge rate is increased by increasing the pressure of the nitrogen, the time for the nitrogen to reach the discharge port 16 may be shortened. That is, the first phase may be shortened. In this case, the discharge amount of the high viscosity resin in the first phase may rather decrease due to the shortened first phase.

Thereafter, in the second phase, the increase in the discharge amount of the high viscosity resin is somewhat alleviated, and the high viscosity resin is discharged in an uncontrolled manner.

As described above, the high viscosity resin is discharged in the controlled manner in the first phase and discharged in the uncontrolled manner in the second phase. Therefore, in order to increase the discharge rate of the high viscosity resin and to reduce the undischarged amount, it is necessary to increase the amount of the high viscosity resin discharged in the first phase to the maximum. A relationship between the ratio of the diameter of the discharge port to the diameter of the reactor and the discharge amount of the high viscosity resin in the first phase will hereinafter be described.

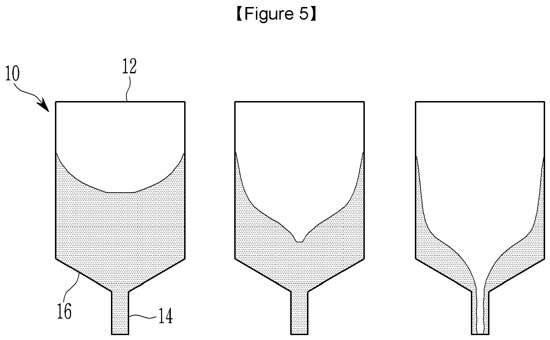

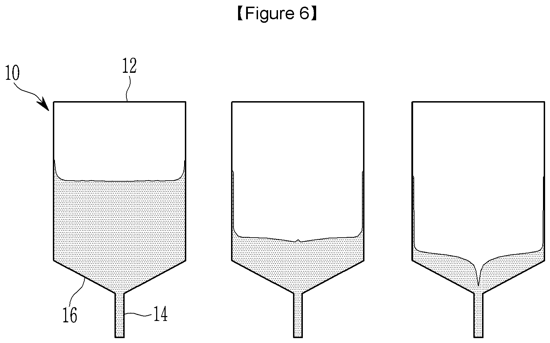

FIG. 5 is a schematic diagram showing a flow of the high viscosity resin in the reactor over time when the ratio of the diameter of the discharge port to the diameter of the reactor is 4/30, and FIG. 6 is a schematic diagram showing a flow of the high viscosity resin in the reactor over time when the ratio of the diameter of the discharge port to the diameter of the reactor is 2/30. FIGS. 5 and 6 show the flow of the high viscosity resin in the reactor based on the same time point.

As shown in FIG. 5, when the ratio of the diameter of the discharge port to the diameter of the reactor is 4/30, the surface of the remaining high viscosity resin is concave downward relatively quickly, and the time required for the nitrogen to reach the discharge port 16 is relatively short. That is, the first phase is shortened.

In contrast, as shown in FIG. 6, when the ratio of the diameter of the discharge port to the diameter of the reactor is 2/30, the surface of the remaining high viscosity resin remains on a substantially horizontal plane for a longer time, and the time required for the nitrogen to reach the discharge port 16 is relatively long. That is, the first phase is lengthened.

The discharge amounts of the high viscosity resin in the first phase at the various ratios of the diameter D2 of the discharge port to the diameter D1 of the reactor are shown in Table 1.

**(Table 1)**

| D2/D1 | 8/30 | 6/30 | 4/30 | 3/30 | 2/30 |
|---|---|---|---|---|---|
| Discharge amount (%) | 36.2 | 37.2 | 45.9 | 64.9 | 81.8 |

In Table 1, the discharge amount is a percentage of the discharge amount of the high viscosity resin in the first phase relative to the amount of the high viscosity resin in the reactor 11 before discharge.

Referring to Table 1, when the diameter D2 of the discharge port relative to the diameter D1 of the reactor is relatively large (e.g., 4/30 or greater), the discharge rate of the high viscosity resin is too high, and the nitrogen reaches the discharge port 16 too quickly. Therefore, the first phase is shortened, and accordingly, even a half of the high viscosity resin is not discharged during the first phase.

However, when the diameter D2 of the discharge port relative to the diameter D1 of the reactor is relatively small (for example, 3/30 or less), the first phase becomes longer and about 65% or more of the high viscosity resin is discharged during the first phase. In particular, when the diameter D2 of the discharge port to the diameter D1 of the reactor is 1/15 or less, about 82% or more of the high viscosity resin is discharged during the first phase.

On the other hand, in the first phase, the high viscosity resin near the side surface of the conical part 16 may remain in the reactor 11 without being greatly affected by the applied nitrogen during the first phase. In this way, in order to reduce the high viscosity resin remaining in the reactor 11 during the first phase, the angle θ1 between the side surface of the conical part 16 and the horizontal plane can be set to correspond to the angle θ2 between the surface of the remaining high viscosity resin and the horizontal plane. In this case, the amount of the high viscosity resin that is not affected by nitrogen is reduced, so that the amount of the high viscosity resin remaining in the reactor 11 during the first phase is reduced.

Various experiments revealed that the angle θ2 between the surface of the remaining high viscosity resin and the horizontal plane was about 45°. Accordingly, the angle θ1 between the side surface of the conical part 16 and the horizontal plane may be set within a range of 40° to 50°.

However, it is known that the angle θ1 between the side surface of the conical part 16 and the horizontal plane affects a mixing performance of the high viscosity resin. The mixing performance of the high viscosity resin according to the angle θ1 between the side surface of the conical part 16 and the horizontal plane will be described.

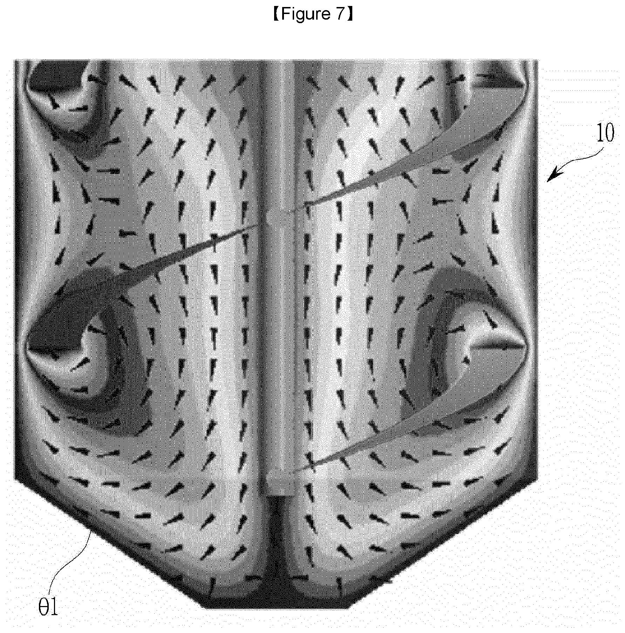

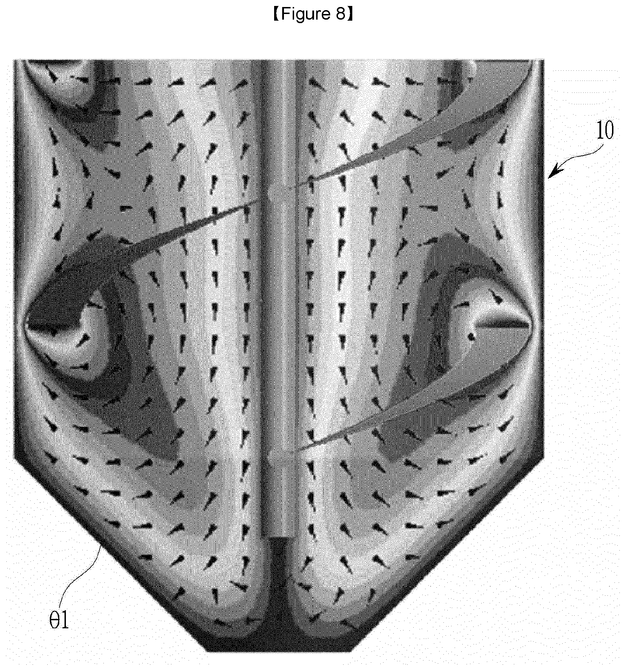

FIG. 7 is a schematic diagram showing the flow of the high viscosity resin during mixing of the high viscosity resin when the angle between the side surface of the conical part and the horizontal plane is 30°, showing the mixing performance of a generally used reactor. FIG. 8 is a schematic diagram showing the flow of the high viscosity resin during mixing of the high viscosity resin when the angle between the side surface of the conical part and the horizontal plane is 45°, showing the mixing performance of the reactor according to an exemplary embodiment of the present invention.

As shown in FIGS. 7 and 8, there is no significant difference between the mixing performance of the reactor 11 when the angle θ1 between the side surface of the conical part 16 and the horizontal plane is 30° and the mixing performance of the reactor 11 when the angle θ1 between the side surface of the conical part 16 and the horizontal plane is 45°. A power consumption per unit volume (P/V) and up/down circulation time, which indicate the mixing performance, are shown in Table 2.

**(Table 2)**

| | Comparative Example | Example |
|---|---|---|
| θ1(°) | 30 | 45 |
| P/V(kW/m³) | 96.97 | 95.40 |
| Circulation time (s) | 2.79 | 2.73 |

Referring to Table 2, the power consumption per unit volume (P/V) in Comparative Example is 96.97 kW/m³, and the power consumption per unit volume (P/V) in Example is 95.40 kW/m³. That is, there is little difference in the power consumption per unit volume between the Comparative Example and the Example, and the power consumption per unit volume is rather reduced in the Example.

In addition, the up/down circulation time in the Comparative Example is 2.79 s and the up/down circulation time in the Example is 2.73 s. That is, there is little difference in the up/down circulation time between the Comparative Example and the Example, and the up/down circulation time is rather reduced in the Example.

Therefore, it can be seen that even when the angle θ1 between the side surface of the conical part 16 and the horizontal plane is set within the range of 40° to 50 °, the mixing performance of the reactor 11 does not change significantly, but rather slightly increases. However, when the angle θ1 between the side surface of the conical part 16 and the horizontal plane is set within the range of 40° to 50°, the amount of the high viscosity resin in the reactor 11 that is affected by the nitrogen application further increases, and therefore, the amount of the high viscosity resin discharged from the reactor 11 during the first phase may be increased.

While this invention has been described in connection with what is presently considered to be practical exemplary embodiments, it is to be understood that the invention is not limited to the disclosed exemplary embodiments. On the contrary, it is intended to cover various modifications and equivalent arrangements included within the spirit and scope of the appended claims.

## Claims

1. A polymerization reaction device of a high viscosity resin comprising:
a cylindrical reactor having an inlet formed at an upper part and a discharge port formed at a lower part; and
an impeller rotatably arranged inside the reactor and configured to mix materials in the reactor,
wherein the materials in the reactor are mixed by the impeller and polymerized into the high viscosity resin, and the polymerized high viscosity resin is discharged to an outside of the reactor through the discharge port by applying an inert gas, and
wherein a ratio of a diameter of the discharge port to a diameter of the reactor is set such that 80% or more of the high viscosity resin is discharged from the reactor from a time point when the applying of the inert gas starts to a time point when the inert gas reaches the discharge port.

2. The polymerization reaction device of a high viscosity resin of claim 1, wherein:
the ratio of the diameter of the discharge port to the diameter of the reactor is 1/15 or less.

3. The polymerization reaction device of a high viscosity resin of claim 1, wherein:
the lower part of the reactor is formed as a conical part whose diameter decreases downward toward the discharge port, and
wherein an angle between a side surface of the conical part and a horizontal plane is set to correspond to an angle between a surface of the high viscosity resin remaining in the reactor and the horizontal plane at the time point when the inert gas reaches the discharge port.

4. The polymerization reaction device of a high viscosity resin of claim 3, wherein:
the angle between the side surface of the conical part and the horizontal plane is 40° to 50°.

5. The polymerization reaction device of a high viscosity resin of claim 3, wherein:
the impeller comprises:
a vertical frame installed in a vertical direction inside the reactor and configured to rotate by receiving rotational power;
at least one horizontal frame mounted to the vertical frame and extending in a radial direction;
at least one blade mounted to the at least one horizontal frame and formed in a spiral shape to surround the vertical frame; and
an anchor mounted to the lowermost horizontal frame among the at least one horizontal frame and protruding downward to a position corresponding to the conical part.

6. The polymerization reaction device of a high viscosity resin of claim 5, wherein:
the anchor comprises:
a first portion installed at a radially outer end portion of the lowermost horizontal frame and extending obliquely downward to correspond to the side surface of the conical part; and
a second portion installed on the lowermost horizontal frame on a radially inner side of the first portion, extending downward and connected to the first portion.

7. The polymerization reaction device of a high viscosity resin of claim 6, wherein:
the second portion is spaced apart from an outer circumferential surface of the discharge port by a set distance in a radially outward direction.

8. The polymerization reaction device of a high viscosity resin of claim 1, wherein:
the inert gas is nitrogen.

9. The polymerization reaction device of a high viscosity resin of claim 1, wherein:
the high viscosity resin is a biodegradable resin.
